# EUROPEAN PATENT SPECIFICATION

(11) **EP 2 214 434 B1**
(45) Date of publication and mention of the grant of the patent: **09.04.2014**
(21) Application number: 09360009.6
(22) Date of filing: 30.01.2009
(51) Int. Cl.: H04W 36/00, H04W 84/04

(54) **Discovering neighbouring femto cells**
Entdeckung von Nachbarfemtozellen
Découverte de cellules femto voisines

(43) Date of publication of application: 04.08.2010
(73) Proprietor: Alcatel Lucent, 75007 Paris (FR)
(72) Inventor: Sapiano, Philip, Corsham, Wiltshire SN13 9AY (GB); Bradley, Nigel, Cricklade SN6 6LT (GB); Cassuto, Philippe, Nueilly-Sur-Seine 92200 (FR)
(74) Representative: Sarup, David Alexander

(56) References cited:
- EP-A- 1 983 786
- GB-A- 2 447 569
- US-A1- 2007 097 939

## Description

### FIELD OF THE INVENTION

The present invention relates to a method of discovering neighbouring cells by a femto base station in a wireless communications network, a femto base station and a central node.

### BACKGROUND OF THE INVENTION

Wireless telecommunications systems are known. In a cellular system, radio coverage is provided by areas known as cells. A base station is located in each cell to provide the radio coverage. Traditional base stations provide coverage in relatively large geographical areas and the cells are often referred to as macro cells: It is possible to provide smaller sized cells within a macro cell. Such smaller sized cells are sometimes referred to as micro cells, pico cells or femto cells. One way to establish a femto cell is to provide a femto cell base station that provides coverage having a relatively limited range within the coverage area of a macro cell. The transmission power of a femto cell base station is relatively low and hence each femto cell provides a small coverage area compared to that of a macro cell and covering, for example, an office or a home.

Such femto cells are typically provided where the communications coverage provided by the macro cell is poor or where a user wishes to use an alternative communications link provided locally, by the femto cell base station, to communicate with the core network. Such a situation may arise where, for example, a user has a pre-existing communications link and the user wishes to utilise that link in preference to that provided by a macro cell network provider to communicate with the core network. Femto cell base stations may be private access or public access. In femto cell base stations that are private access, access is restricted only to registered users, such as family members or particular groups of employees. In femto cell base stations that are public access, other users may also use the femto cell base station, subject to certain restrictions to protect the quality of service received by registered users.

A typical femto cell base station utilises a broadband Internet protocol connection as backhaul for connecting to the core network. One type of broadband connection is a digital subscriber line (DSL), which connects a DSL transceiver of the femto cell base station to the core network. The DSL enables voice calls and other services provided via the femto cell base station to be supported. The femto base station may also connect using an Ethernet connection to the Internet. The femto cell base station also includes a radio frequency (RF transceiver) connected to an antenna for radio communication within the femto cell. The femto base station generates a femto cell typically in the vicinity of a building, with which user equipment may communicate with in preference to a base station of the macro cell.

In accordance with the third generation partnership project (3GPP) universal mobile telecommunications system (UMTS) standards, primary scrambling codes are used to distinguish between neighbouring base stations.. Typically, there are between 6 and 16 PSCs that are available for use by femto cells. The PSC to be used by each femto cell base station is typically selected by an automatic configuration process, based on measurements made by that femto cell base station. For example, a femto cell base station may detect, from received signals, which PSCs are in use around the femto cell base station and may select a PSC that the femto base station has not detected as being in use; otherwise, the femto base station may select the PSC of the weakest signal received. Consequently, there is typically much PSC reuse since there is are relatively few PSCs to be used by relatively many femto cell base stations.

In a typical wireless network many tens of thousands femto base stations may be deployed within a network under the control of one network provider, which can make the manual provision and planning of the femto cell deployment impractical for an operator. In addition, the network operator is unable to control the location of the femto cells to help prevent any undue interference. Hence, it is desirable for the femto cell base stations to be able to automatically configure themselves, based on their assessment of the environment in which they operate. In order to enable handover between femto base stations in open access and closed access group deployments and to enable automatic location area identifier allocation between femto base stations it is necessary to determine characteristics of the neighbouring femto cells. However this determination becomes increasing difficult in a highly congested and densely arranged femto cell deployment.

US 2007/0097939 A1 discloses techniques for configuring a femto radio base station. A macro receiver of the femto radio base station is used to acquire detected coverage information of a radio access network. The detected coverage information is used to determine an operation parameter for use by the macro transceiver of the femto radio base station. The macro receiver scans the surrounding coverage to find out the system information of the surrounding radio access network such as what frequencies and cells are being used in the surrounding network. From this information, a scanned parameter list builder builds one or more lists of system information gathered during this scan. When a user equipment unit reports an unknown detected cell, the RNC orders the femto radio base station macro mode receiver to perform another scan.

GB 2 447 569 A discloses techniques for managing registration requests from unauthorised user equipment in a cellular communications network. Registration requests are monitored and a count is maintained of the total number registration requests from user equipment. Based on the counted number of unsuccessful registration requests, different mechanisms can be used to reject the registration request. Each femto base station selects its own local area code from an appropriate group. Each femto base station may randomly select a local area code and may learn of the local area codes of neighbouring base stations by detecting the signals from those base stations directly or through communications with the management system. In order to enable the local area code to be learned through communication with the management system, once the femto base station has chosen its local area code it then informs the management system of the selected value. When a greater than a predefined trouble spot threshold of failed registration requests from user equipments occurs at a particular bases station, the base station sends a message to the management system. If a reject loop indication has been received by the management system it may compare the local area code of the reporting cell with the local area codes of the rejected user equipments home femto cell. If the two are different then the management system may instruct the femto cell to put the local area code on the forbidden list of the user equipment. However, if there is an overlap between the local area codes then the management system may prevent the femto cell issuing a rejection.

Accordingly, it is desired to provide an improved technique for determining neighbouring femto cells.

### SUMMARY OF THE INVENTION

According to one aspect of the present invention, there is provided a method of discovering neighbouring femto cells by a femto base station in a wireless communications network as claimed in claim 1.

The first aspect recognises that a problem with generating a femto cell neighbour list is that the detection of neighbouring femto base station by receiving their transmissions (referred to herein as 'sniffing') performed by the femto base station itself for neighbouring cells may only identify a subset of all the neighbouring femto cells. This is because it is not always possible for the femto base station itself to determine which other cells may be accessible from all points within the femto cell supported by that femto cell base station. Such a situation may arise where, for example, two femto cell base stations are closely adjacent to one another, but it is not possible for one to detect the other since there in an obstruction between the two. However, user equipment positioned at particular points within the femto cells may readily be able identify both femto base stations. Hence, it may be that user equipment may need to handover from one femto cell to another, but such a handover is not possible because the other femto cell is not identified within the femto cell neighbour list.

Accordingly, in addition to generating a femto cell neighbour list by sniffing, user equipment reports are used to augment the list when the user equipment identifies a femto base station which is not currently included in the neighbour list. Hence, after receiving a user equipment report, which includes transmission characteristics of a femto base station identified by that user equipment, a determination is made as to whether those transmission characteristics correlate with any of the entries currently within the neighbour list. If there is a correlation, then no update to the neighbour list will be necessary. However, if there is no correlation with the existing entries, then the wireless communications network is requested to provide information relating to the newly identified femto base station. This information, together with the information in the user equipment report is then used to add a further entry into the neighbour list for the newly identified femto case station. In this way, it can be seen that a complete picture of neighbouring femto base stations can be built up based on reports provided by user equipment relating to other femto base stations that can be identified from different locations within the femto cell. Hence, even with transmission path obstructions, it is possible to build up a complete list of neighbouring femto cells.

In one embodiment, the step of interrogating comprises the steps of: transmitting the user equipment discovered transmission characteristics to a central node of the wireless communications network having a femto cell list having an entry including transmission characteristics and femto cell identification characteristics for a number of femto base stations within the wireless communications network; determining whether the user equipment discovered transmission characteristics correlates with any of the transmission characteristics of entries within the femto cell list; and when the user equipment discovered transmission characteristics correlates with any of the transmission characteristics of entries within the femto cell list, transmitting femto cell identification characteristics for the user equipment discovered femto base station to the "querying" femto base station. Accordingly, the information from the user equipment report may be forwarded to a central node which maintains a list which includes information relating to femto base stations within the wireless communications network. The list may be a complete list of all femto base stations, if it is a requirement for those femto base stations to provide this information on auto-initialisation. However, in practice, this could be restricted to only open access femto base stations or femto base stations belonging to a group providing such information to the central node. All other femto base stations may only enable predetermined registered users to have access and so it is likely that it would be desirable to force user equipment to restore communication with the macro cell, rather than communicating with that femto base station and so such femto base stations may forward their information to the central node or the central node may receive this information but not return this information to a requesting or querying femto base station.

In one embodiment, the step of determining whether the user equipment discovered transmission characteristics correlates with any of the transmission characteristics of entries within the femto cell list comprises the step of: determining whether the user equipment discovered transmission characteristics correlates with any of the transmission characteristics of entries within the femto cell list having a group identifier identical to that of the femto base station. By only correlating within a group, the neighbour list only becomes populated with those femto stations with which it is desirable for user equipment to be passed to.

In one embodiment, the step of interrogating comprises the steps of: transmitting the user equipment discovered transmission characteristics to other femto base stations of the wireless communications network; and when the user equipment discovered transmission characteristics correlates with transmission characteristics of one of the other femto base stations, receiving from the one of the other femto base stations femto cell identification characteristics for the user equipment discovered femto base station. Hence, the information may instead by transmitted to other femto base stations within the wireless communications network. Those femto base stations may determine whether this information correlates with their transmission characteristics and, if so, information identifying the femto base station will be transmitted back to the querying femto base station. In this way, it can be seen that the newly discovered femto base station may then be added to the neighbour list using information provided directly by that discovered femto cell base station.

In one embodiment, the step of transmitting the user equipment discovered transmission characteristics to other femto base stations of the wireless communications network comprises: transmitting the discovered transmission characteristics over a multicast channel to which the other femto base stations are subscribed, the transmission identifying the femto base station to which the femto cell identification characteristics for the user equipment discovered femto base station are to be sent. Accordingly, those femto base stations likely to be included in a neighbour list may subscribe to the multicast channel and respond to any femto base stations which provide correlating transmission information.

In one embodiment, the method comprises the step of: establishing communication with femto base stations within the femto cell neighbour list to enable exchange of at least one of transmission characteristics and femto cell identification characteristics. Hence, the information included in the neighbour list may enable communication to be established, typically over the backhaul, between femto base stations to enable the exchange of information to occur. Such exchange of information may be used to enhance the information held in the neighbour list. For example, once communication has been established, a femto base station may confirm to another femto base station its primary scrambling code and actual timing offset. The actual timing offset may then be utilised to provide a more accurate indication than that measured by the user equipment which may be subject to propagation delays and jitter. Also, the communication link between the femto base stations may be utilised to ensure that when any configuration changes occur to one femto base station, these changes are then communicated to other femto base stations within its neighbour list.

In one embodiment, the transmission characteristics comprise at least one of a primary scrambling code and a transmission timing offset. By utilising a primary scrambling code and a transmission timing offset, the ability to distinguish different femto cell base stations is greatly increased. For example, in a wireless system where each cell is driven from a clock rate of 10 milliseconds, the effective resolvable time between cells may be within 0 to 256 10-millisecond frames, with one chip resolution. In an example network of 12,000 femto base stations where there are six available primary scrambling codes, using the primary scrambling code alone to identify a neighbour femto base station could provide a set of up to 2,000 possible femto base stations, which would not be helpful. However, when using the timing information as well, this can be narrowed down to a list of one potential femto base station, which provides for significantly improved accuracy.

In one embodiment, the method comprises the step of: receiving at least one of a newly allocated primary scrambling code and transmission timing offset for said femto base station. Hence, the femto base station may receive a new primary scrambling or transmission timing offset to ensure that both are unique at least locally. It will be appreciated that this allocation may be made in conjunction with the central node or other femto base stations.

In one embodiment, the femto cell identification characteristics comprise at least one of a femto cell identifier, a location area identifier and a group identifier.

In one embodiment, the method comprises the steps of: identifying whether a location area identifier associated with the user equipment discovered femto base station is identical to a location area code associated with the femto base station and whether the user equipment discovered femto base station belongs to a different group to that of the femto base station and, if said user equipment discovered femto base station is identical to a location area code associated with said femto base station and said user equipment discovered femto base station belongs to a different group to that of said femto base station, then changing the location area code for a group containing the femto base station. Accordingly, when it is determined that a discovered femto base station which is not part of the group containing the femto base station which received the user equipment report has the same location area code then the location area code for that group may be changed to prevent camping onto a femto base station not within the group from occurring.

In one embodiment, the step changing comprises: determining a location area code not contained in any entry of any femto cell neighbour list of femto cell base stations within said group and containing said femto base station changing the location area code for said group containing said femto base station to the location area code not contained in any entry of any femto cell neighbour list of femto cell base stations within said group containing said femto base station. Accordingly, the neighbour lists of all the femto base stations within the group may be examined to identify a location area identifier which is not included within any of those neighbour lists. This helps to prevent the location area identifier being changed to one which would cause a conflict for another femto base station within the group.

In one embodiment, the method comprises the step of: causing user equipment to transmit the user equipment report in response to at least one of handling an active call and initiating a connection establishment request message. It will be appreciated that such a connection establishment request message (e.g. a 3GPP RRC Connection request) will be generated when camping from one femto cell to another femto cell, as well as in other circumstances.

In one embodiment, the initiating a connection establishment request message comprises camping from one femto cell to another femto cell having a differing location area code to the one femto cell.

According to a second aspect of the present invention, there is provided a femto base station operable to discover neighbouring femto cells in a wireless communications network, the femto base station comprising: detection logic operable to detect neighbouring femto base station by receiving their transmissions; a femto cell neighbour list having an entry including transmission characteristics and femto cell identification characteristics for each neighbouring femto base station detected by the detection logic; reception logic operable to receive a user equipment report including user equipment discovered transmission characteristics relating to a user equipment discovered femto base station; correlation logic operable to determine whether the user equipment discovered transmission characteristics correlates with any of the transmission characteristics of entries within the neighbour list; interrogation logic operable, when no correlation exists, to interrogate the wireless communications network to obtain from said wireless communications network, femto cell identification characteristics for the user equipment discovered femto base station and to add the femto cell identification characteristics for the user equipment discovered femto base station together with the user equipment discovered transmission characteristics as a further entry in the neighbour list.

In one embodiment, interrogation logic is operable to transmit the user equipment discovered transmission characteristics to a central node of the wireless communications network having a femto cell list having an entry including transmission characteristics and femto cell identification characteristics for a number of femto base stations within the wireless communications network and to receive femto cell identification characteristics for the user equipment discovered femto base station.

In one embodiment, the interrogation logic is operable to transmit the user equipment discovered transmission characteristics to other femto base stations of the wireless communications network and to receive from the one of the other femto base stations femto cell identification characteristics for the user equipment discovered femto base station.

In one embodiment, the interrogation logic is operable to transmit the user equipment discovered transmission characteristics to other femto base stations of the wireless communications network comprises over a multicast channel to which the other femto base stations are subscribed, the transmission identifying the femto base station to which the femto cell identification characteristics for the user equipment discovered femto base station are to be sent.

In one embodiment, the femto base station comprises: establishing logic operable to establish communication with femto base stations within the femto cell neighbour list to enable exchange of at least one of transmission characteristics and femto cell identification characteristics.

In one embodiment, the transmission characteristics comprise at least one of a primary scrambling code and a transmission timing offset.

In one embodiment, the femto cell identification characteristics comprise at least one of a femto cell identifier, a location area identifier and a group identifier.

In one embodiment, the femto base station comprises: identification logic operable to identify whether a location area identifier associated with the user equipment discovered femto base station is identical to a location area code associated with the femto base station and whether the user equipment discovered femto base station belongs to a different group to that of the femto base station and, if so, to change the location area code for that group containing the femto base station.

In one embodiment, the identification logic is operable to determine a location area code not contained in any entry of any femto cell neighbour list of femto cell base stations within that group and to change the location area code for that group to the location area code not contained in any entry of any femto cell neighbour list of femto cell base stations within that group.

In one embodiment, the femto base station comprises report logic operable to cause user equipment to transmit the user equipment report in response to at least one of handling an active call and initiating a connection establishment request message. It will be appreciated that such a connection establishment request message will be generated when camping from one femto cell to another femto cell, as well as in other circumstances.

In one embodiment, the camping from one femto cell to another femto cell comprises camping from one femto cell to another femto cell having a differing location area code to the one femto cell.

According to a third aspect of the present invention, there is provided a central node operable to identify neighbouring femto cells discovered by a femto base station in a wireless communications network, the central node comprising: reception logic operable to receive user equipment discovered transmission characteristics from a femto base station; a femto cell list having an entry including transmission characteristics and femto cell identification characteristics for a number of femto base stations within the wireless communications network; correlation logic operable to determine whether the user equipment discovered transmission characteristics correlates with any of the transmission characteristics of entries within the femto cell list; and transmission logic operable, when the user equipment discovered transmission characteristics correlates with any of the transmission characteristics of entries within the femto cell list, to transmit femto cell identification characteristics for the user equipment discovered femto base station to the femto base station.

In one embodiment, the correlation logic is operable to determine whether the user equipment discovered transmission characteristics correlates with any of the transmission characteristics of entries within the femto cell list and the transmitting logic is operable, when the user equipment discovered transmission characteristics correlates with any of the transmission characteristics of entries within the femto cell list, to transmit femto cell identification characteristics for the user equipment discovered femto base station to the femto base station.

In one embodiment, the correlation logic is operable to determining whether the user equipment discovered transmission characteristics correlates with any of the transmission characteristics of entries within the femto cell list having a group identifier identical to that of the femto base station.

In one embodiment, the transmission characteristics comprise at least one of a primary scrambling code and a transmission timing offset.

In one embodiment, the femto cell identification characteristics comprise at least one of a femto cell identifier, a location area identifier and a group identifier.

According to a fourth aspect of the present invention, there is provided a computer program product, when executed on a computer, to perform the method steps of the first aspect.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates a general femto cell deployment within one macro cell shown in Figure 1;
Figure 3 illustrates in more detail a specific femto cell deployment within the wireless communications network of Figure 1;
Figure 4 illustrates in more detail elements of a femto base station, user equipment and femto controller/gateway; and
Figure 5 illustrates major interactions between components of the wireless communications network.

### DESCRIPTION OF THE EMBODIMENTS

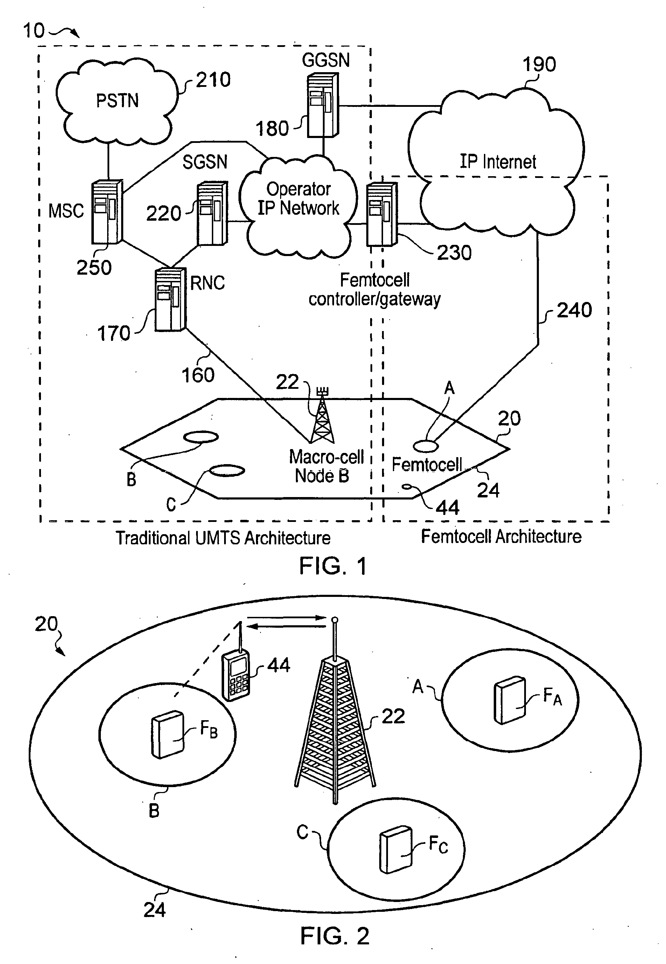

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 10 is managed by a radio network controller 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the Internet.

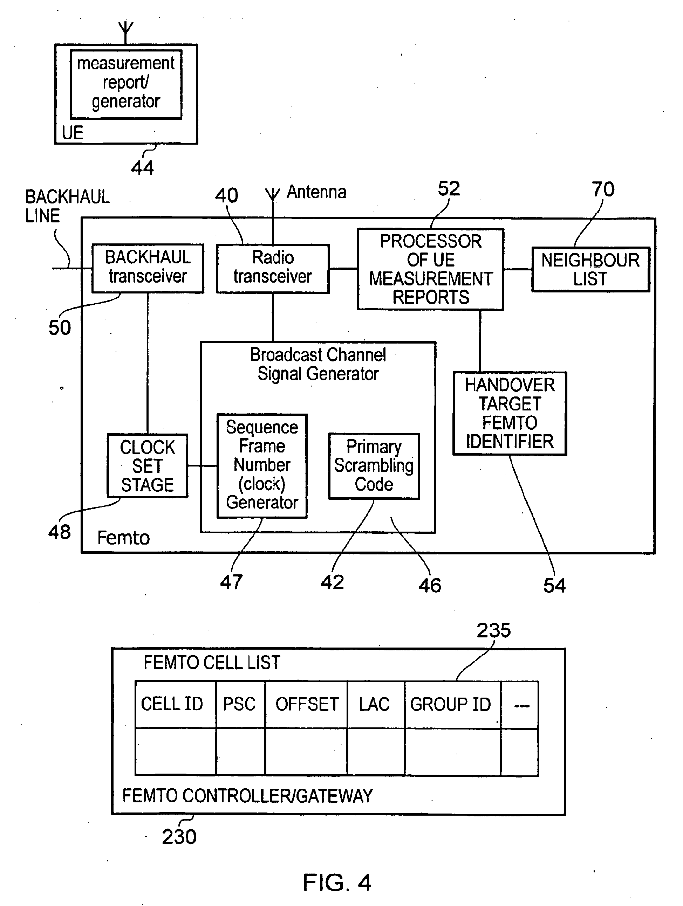

As shown in more detail in Figure 2, there are provided femto cell base stations F_{A} to F_{C}, each of which provides a femto cell A to C in the vicinity of a building within which the associated femto cell base station is installed. The femto cells A to C provide local communications coverage for a user in the vicinity of those buildings. Each femto cell base station F_{A} to F_{C} communicates via a femtocell controller/gateway 230 illustrated in Figure 4. A handover or camping event occurs between the base station 22 and the femto cell base stations F_{A} to F_{C} when the femto base stations F_{A} to F_{C} detect that user equipment comes within range. The femto cell base stations F_{A} to F_{C} typically utilise the user's broadband Internet connection 240 (such as ADSL, Cable, Ethernet, etc.) as a backhaul.

Femto cell base stations F_{A} to F_{C} are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to F_{C} are provided locally by customers. Such femto cell base stations F_{A} to F_{C} provide local coverage in areas of the macro network where quality of service may be low. Hence, the femto cell base stations F_{A} to F_{C} provide for improved quality of service in areas which are difficult for network operators. To reduce the cost of the femto base stations F_{A} to F_{C} and to reduce complexity and interference effects of the femto cell on other user equipment within the macro cell, the transmission power of the femto cell base station F_{A} to F_{C} is relatively low in order to restrict the size of the femto cell to a range of tens of metres or less. The femto cell base stations F_{A} to F_{C} have extensive auto-configuration and self-optimisation capability to enable a simply plug-and-play deployment. As such, they are designed to automatically integrate themselves into an existing macro cellular wireless network 10. In addition, some access point within the macro cellular network contains some functionality traditionally provided by the core network. One example is the UMTS base station router which integrates functions of the macro base station 20 and RNC 170 (this could be extended to also include the SGSN 220 and GGSN 180).

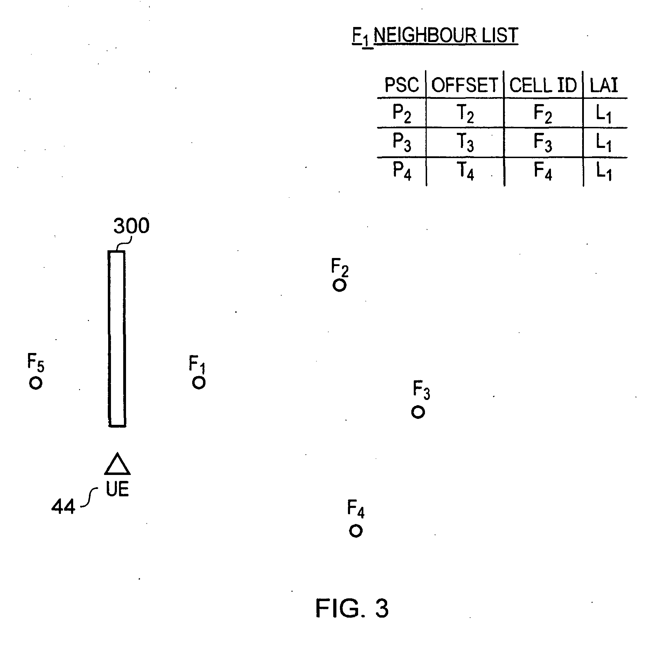

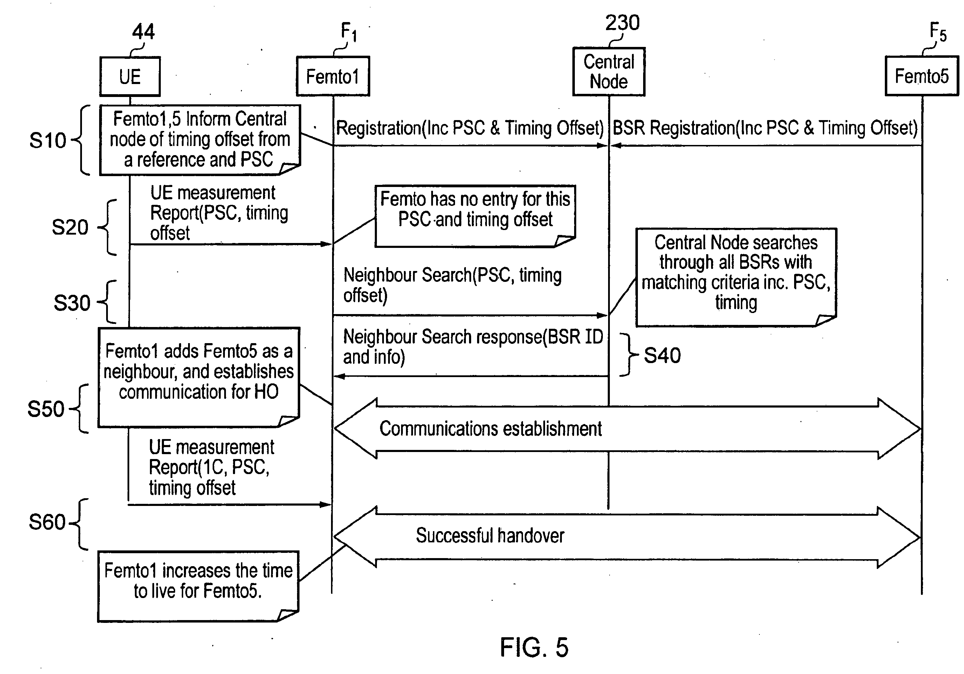

As shown in Figure 3, the arrangement of an example five femto base stations F₁ to F₅ are shown (illustrated in more detail in Figure 4) which are intended to provide continuous coverage, for example within an office building. However, due to the presence of an obstruction 300, signals transmitted by the femto base station F₅ are not detected during sniffing by femto base station F₁, and visa versa. Accordingly, in this example, femto base station F₁ will be unaware from its own sniffing that femto base station F₅ supports a neighbouring femto cell, and vice versa. However, as will now be described with reference to Figure 5, the femto base stations measurement reports generated by the user equipment can assist in identifying neighbouring femto cells. This information can then be used both to facilitate handover to previously unknown femto base stations as well as providing a technique to ensue correct use of location area codes.

### Discovered neighbour handover

As shown in Figure 5, at step S10 each femto base station initialises and aims to have a different primary scrambling code. This is typically achieved by each femto base station sniffing to determine currently used primary scrambling codes in its vicinity. For example, suppose femto cells F₃ and F₄ are already active, each having a primary scrambling code of P₃ and P₄, respectively, then when femto base station F₁ is first initialised, it will detect that scrambling codes P₃ and P₄ are in use and will select a different primary scrambling code, in this example P₁. Femto base station F₂ will do likewise and, in this example, selects P₂. Each femto base station is able to determine, by sniffing, the femto cell identifier for the detected femto base stations. This information is then used to establish communications with those detected femto base stations. Each femto base station also aims to transmit with a different timing offset and the currently used timing offsets are determined either through direct communication between those femto base stations or by querying the femto cell controller/gateway 230, this information is then stored in the neighbour list. The femto base station F₁ will select a random timing offset for its own transmissions and, optionally, check that that combination of primary scrambling code and timing offset is not currently present within its neighbour list. If that combination is present, then a different timing offset will be randomly selected. Alternatively, the femto cell controller/gateway 230 will allocate a timing offset and/or a primary scrambling code based on information stored in the femto cell controller/gateway 230 regarding the configuration of the network. The femto base station F₂ will select a timing offset in a similar fashion. The primary scrambling code and timing offset of a femto base station are determined and transmitted to the femto cell controller/gateway 230 for storage in a femto cell list 235, together with the femto base station cell identifier and, optionally, a grouping identifier and a location area code and other relevant information.

The femto base stations may also determine a grouping identifier of neighbouring femto base stations by sniffing or may request this information from the femto cell controller/gateway 230. The femto base stations may then communicate with each other to exchange further information and to confirm any information detected by one femto base station in relation to a neighbour.

It will be appreciated that it is important to provide a complete list of neighbour cells for a femto base station in order to support handover between femto base stations in open access and closed access group deployment, as well as to enable automatic location area code allocation between femto base stations. However, as is clear from the discussion above, a femto base station may not be able to identify every neighbouring cell. The user equipment 44, when located away from the obstruction 300, is able to detect both femto base station F₁ and F₅. However, neither femto base station F₁ nor femto base station F₅ can perform a handover between each other because they do not hold sufficient information about the other to enable the handover to be performed.

At step S20, when the user equipment is involved in making a call, the user equipment 44 will attempt to detect a candidate base station to handover to, should this be required. In this example, the user equipment 44 will detect the primary scrambling code and the timing offset associated with femto base station F₅ and transmits this to the femto base station F₁. In this example, the information does not correlate with any information stored in its neighbour list and the neighbouring femto base station Fs is one which the current base station F₁ does not recognise. Hence, the femto base station F₁ does not have sufficient information to enable a handover to femto base station F₅ to occur, if this is indeed at all possible.

Accordingly, at step S30, the femto base station F₁ queries the femto controller/gateway 230 for a candidate femto base station. The femto base station F₁ will transmit the primary scrambling code details and timing offset to the femto controller/gateway 230. On receipt of this information, the femto gateway/controller 230 will check for a correlation within the femto base station information held in its femto cell list. Typically, the femto controller/gateway 230 will only search for matching femto base stations within the same grouping as the femto base station F₁. This is because it would typical for user equipment to be handed back to the macro base station if the femto base station F₅ was not part of the current group.

At step S40, if a match occurs, then the femto controller/gateway 230 will transmit the femto cell identifier and location area code for femto base station F₅ and information to set up communication (such as, for example, an IP address) to femto base station F₁.

At step S50, the neighbour list within femto base station F₁ is updated to include the information for femto base station F₅ to enable a handover between femto base station F₁ and F₅ to occur. The femto base stations may then communicate with each other to exchange further information and to confirm the measured information.

At step S60, the user equipment 44 transmits a measurement report which indicates that the relative strengths of the signals from femto base stations F₁ and F₅ indicate that a handover to femto base station F₅ should occur. Accordingly, using the information now contained in the neighbour list, the handover can be made from femto base station F₁ to femto base station F₅.

In an alternative arrangement, rather than utilising a centralised femto controller/gateway 230 to store this information, femto base stations within the wireless communications network may subscribe to a multicast channel over which detected a primary scrambling code and timing offset may be transmitted. As before, this transmission may occur following detection of a previously unlisted femto base station detected within the measuring report. The matching femto base station, upon receipt of that information over the multicast channel, will respond by indicating to the requesting femto base station the femto cell identifier and location area identifier of that femto cell.

Irrespective of which technique is used to identify the femto base station, once the information has been provided to the neighbour list then communication may be established with that femto base station to validate the primary scrambling code used and the timing offset since the timing offset measured by the user equipment may be subject to propagation delays and jitter. Any future configuration changes that may be made to the femto base station will be communicated to other femto base stations included in the neighbour list.

### Automatic location area code configuration

In this example, femto base stations F₁ to F₄ are restricted access femto base stations in that they only allow a certain list of users access to the femto cells and all other users must be redirected back to the macro network. The femto base stations F₁ to F₄ must be able to automatically allocate their location area codes so that they are differentiated from that of their neighbours in order to ensure that user equipment do not silently camp onto any of those femto base stations from a neighbour.

Accordingly, at step S10, each femto base station within the restricted access group will also establish, from their automatically initiated neighbour list, location area codes of other femto base stations (not shown) which neighbour those femto base stations. In this example, the femto base stations F₁ to F₄ establish that none of their neighbours utilise the location area code L₁. Hence, each femto base station F₁ to F₄ utilises the location area code L₁. Each femto base station will register its primary scrambling code and timing offset, together with its location area code to the femto controller/gateway 230. Should these details change, then the femto controller/gateway 230 is reinformed.

At step S20, the femto base station F₁ periodically instruct user equipment 44 to perform periodic measurements of neighbouring femto base stations and report the primary scrambling code and timing information.

At step S30, should the user equipment 44 report a primary scrambling' code and timing combination which the femto base station F₁ cannot find within its neighbour list, then it queries the femto controller/gateway 230 for possible matches based on the timing offset and the primary scrambling code reported by the user equipment 44.

At step S40, the femto controller/gateway 230 then performs a match search within its femto cell list and reports back a femto cell identifier, along with the location area code for the femto base station F₅.

At step S50, the femto base station F₁ will add this information as a new entry in the neighbour list. In the event that the location area code utilised by femto base station F₅ matches that used by femto base station F₁, and should femto base station F₅ not be part of the restricted access group, then the femto base station F₁ will collaborate with femto base stations F₁ to F₄ to determine a new location area code to be utilised. Typically, a location area code not present in any of the neighbour lists of the femto base stations within the group will be selected. Once a new location area code has been selected, this is sent to the femto controller/gateway 230 to enable its femto cell list to be updated.

### Femto base stations

As shown in Figure 4, the femto base station has a radio transmitter-receiver 40. The radio transceiver 40 is connected to broadcast channel (BCH) signal generator 42. The broadcast cast channel signal generator 42 includes a cell system frame number (SFN) generator 47 (which generates a timing offset, as will be described in more detail below) and primary scrambling code (PSC) information 46. The SFN generator 44 is connected to clock-setting stage 48 that is connected to a backhaul transceiver 50. The backhaul transceiver 50 is connected to the IP backhaul 240, which in turn is connected to the Internet 190. The radio transceiver 40 is also connected to a processor 52 which processes measurement reports received from the user equipment 44. The processor 52 is also connected to an identifier of a handover target femto base station.

In use, the BCH signal generator 42 sends broadcast signals that include both primary scrambling code and current system frame number. The system frame number is a clock signal that increments from 0 to 255 every 10 milliseconds and then repeats. The SFN has a timing offset which is set by the clock-setting stage 48 that receives a clock adjustment control signal which is either randomly generated or provided via the backhaul 240 from the femto controller/gateway 230.

The measurement report generated by the measurement report generator within the user equipment 44 includes information on the timing difference between the "source" femto base station and the particular "detected" femto base station. This timing difference is directly related to the difference between the offset applied to the SFN in the source femto base station and the offset applied to the SFN in the detected femto base station. For example, the timing difference is CFN_{source}-SFN_{target} where CFN_{source}= SFNsource+ a known constant.

For example, consider an arrangement of three femto base stations where a first femto base station is the controlling ("source") femto base station for user terminal 44 and uses Primary scrambling code PSC2. Two femto base stations are neighbours to the first femto base station and use the same Primary scrambling code, namely PSC 1. The femto base stations have different timing offsets randomly selected or set by the central control/gateway 230 against a known time point. In this example, second femto base station, which is currently not included in the neighbour list of the first femto base station, has an offset of 128 frames, which is 1280mS, because 1 frame lasts 10 milliseconds. In similar fashion, the first femto base station has an offset of 5, which corresponds to 50mS. Third femto base station, which is currently included in the neighbour list of the first femto base station, has an offset of 30, which corresponds to 300mS.

Upon receiving a signal of sufficient quality that includes Primary scrambling code PSC 1, the user terminal 44 sends a measurement report to the first femto base station that indicates that a received signal with PSC 1 had become the strongest of the received signals from the monitored set of neighbouring femto base stations, so handover is appropriate.

The first femto base station then takes the timing difference recorded in the measurement report and compares that against the information held in its neighbour list. For example, the measurement report includes a timing difference of say 1233mS. Comparing this measured timing difference of 1233mS to the expected timing differences (ignoring the propagation delays, that are small) of 300-50= 250mS for the third femto base station, no correlation exists and so the first femto base station forwards the measurement report to the femto cell controller/gateway 230. The femto cell controller/gateway 230 then identifies those femto base stations within the first femto base station group, identifies those femto base stations within the group using PSC 1 and compares this measured timing difference of 1233mS to the expected timing differences (ignoring the propagation delays, that are small) of 1280-50= 1230mS. From this, the femto cell controller/gateway 230 identifies the second femfo base station and indicates this in a response to the first femto base station, as described earlier.

As mentioned previously, as an alternative to the setting of timing offsets by the femto controller/gateway 230, each femto, upon booting-up, may set the timing offset applied to SFN by selecting the offset randomly from between 0 and 255 seconds. Due to this randomness, there is a likelihood that two neighbouring femto base stations that use the same Primary scrambling code have sufficiently different timings to allow a confident identification of the correct femto base station. One option in this scenario is that the first femto base station will query the neighbour as to its timing offset using socalled "layer 3" signalling of known type. Specifically, the first femto base station knows its own timing offset and queries the neighbouring femto base stations as to their timing offsets.

Another option is for the first femto base station to determine timing offsets by receiving broadcast signals from neighbours. Specifically, the first femto base station measure the timing offset of a neighbour femto base station directly, for example by switching its receiver to monitor the broadcast signal of the neighbour, and comparing the measured timing with its own timing so as to calculate the timing offset of the neighbour. In this situation, the first femto base station may also decode a femto cell identifier in a received broadcast signal. The cell identifier uniquely identifies the neighbour that sent the signal. Accordingly, the first femto base station associates the measured timing offset of the neighbour with the neighbour's femto cell identifier. In accordance with current UMTS standards, user equipment do not report femto cell identifier, but a femto base station may.

Another option, where femto base stations randomly select their own timing offsets from within the range 0 to 255 seconds, is learning the timing offsets of neighbour femto base stations from measurement reports provided by user terminals and history as to handover success. Specifically, the first ("source") femto base station, having a set of neighbouring base stations using the same Primary scrambling code as each other, attempts to handover a call connection to a user equipment to each of the neighbouring base stations. Upon one of the handover attempts being successful, the "source" femto base station records the measurement report from the user equipment that the "source" femto base station received just prior to the handover. Subsequently the "source" femto base station considers the value of timing offset calculated from that measurement report as the timing offset of the neighbouring base station to which the handover was successful. Importantly, upon a further measurement report from a user terminal providing a timing offset that is close to this value, the source femto base station then makes, as a first choice, a handover attempt to this neighbour femto base station; in other words, this neighbour femto base station is considered the handover "target".

This approach enables the Femto network to determine neighbour relations based upon user equipment measurements. In this way, a complete picture of neighbouring femto base stations can be built up based on reports provided by user equipment relating to other femto base stations that can be identified from different locations within the femto cell. Hence, even with transmission path obstructions, it is possible to build up a complete list of neighbouring femto cells. This information can assist in enabling the femto network to be auto-configuring, thereby enabling handover events to occur which would not otherwise be possible and enabling location area codes to be locally determined by the femto base stations themselves.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims and their equivalents.

## Claims

1. A method of discovering neighbouring femto cells by a femto base station (F₁) in a wireless communications network (10), said method comprising the steps of:
populating a femto cell neighbour list (70) for said femto base station by causing said femto base station to detect neighbouring femto base stations by receiving their transmissions, said neighbour list having an entry including transmission characteristics and femto cell identification characteristics for each neighbouring femto base station detected;
receiving (S20) a user equipment report including user equipment discovered transmission characteristics relating to a user equipment discovered femto base station;
determining (S20) whether said user equipment discovered transmission characteristics correlates with any of said transmission characteristics of entries within said neighbour list; and
when no correlation exists, interrogating (S30) said wireless communications network to obtain from said wireless communications network femto cell identification characteristics for said user equipment discovered femto base station and adding said femto cell identification characteristics for said user equipment discovered femto base station together with said user equipment discovered transmission characteristics as a further entry in said neighbour list.

2. The method of claim 1, wherein said step of interrogating comprises the steps of:
transmitting said user equipment discovered transmission characteristics to a central node (230) of said wireless communications network having a femto cell list (235) having an entry including transmission characteristics and femto cell identification characteristics for a number of femto base stations within said wireless communications network:
determining (S30) whether said user equipment discovered transmission characteristics correlates with any of said transmission characteristics of entries within said femto cell list; and
when said user equipment discovered transmission characteristics correlates with any of said transmission characteristics of entries within said femto cell list, transmitting (S40) femto cell identification characteristics for said user equipment discovered femto base station to said femto base station.

3. The method of claim 2, wherein said step of determining whether said user equipment discovered transmission characteristics correlates with any of said transmission characteristics of entries within said femto cell list comprises the step of:
determining whether said user equipment discovered transmission characteristics correlates with any of said transmission characteristics of entries within said femto cell list having a group identifier identical to that of said femto base station.

4. The method of claim 1, wherein said step of interrogating comprises the steps of:
transmitting said user equipment discovered transmission characteristics to other femto base stations of said wireless communications network; and
when said user equipment discovered transmission characteristics correlates with transmission characteristics of one of said other femto base stations, receiving from said one of said other femto base stations femto cell identification characteristics for said user equipment discovered femto base station.

5. The method of claim 4, wherein said step of transmitting said user equipment discovered transmission characteristics to other femto base stations of said wireless communications network comprises:
transmitting said discovered transmission characteristics over a multicast channel to which said other femto base stations are subscribed, said transmission identifying said femto base station to which said femto cell identification characteristics for said user equipment discovered femto base station are to be sent.

6. The method of claim 1, comprising the step of:
establishing (S50) communication with femto base stations within said femto cell neighbour list to enable exchange of at least one of transmission characteristics and femto cell identification characteristics.

7. The method of claim 1, wherein said transmission characteristics comprise at least one of a primary scrambling code and a transmission timing offset.

8. The method of claim 7, comprising the step of:
receiving a newly allocated primary scrambling code and transmission timing offset for said femto base station.

9. The method of claim 1, wherein said femto cell identification characteristics comprise at least one of a femto cell identifier, a location area identifier and a group identifier.

10. The method of claim 9, comprising the steps of:
identifying whether a location area identifier associated with said user equipment discovered femto base station is identical to a location area code associated with said femto base station and whether said user equipment discovered femto base station belongs to a different group to that of said femto base station and, if said user equipment discovered femto base station is identical to a location area code associated with said femto base station and said user equipment discovered femto base station belongs to a different group to that of said femto base station, then changing said location area code for a group containing said femto base station.

11. The method of claim 10, wherein said step changing comprises:
determining a location area code not contained in any entry of any femto cell neighbour list of femto cell base stations within said group containing said femto base station and changing said location area code for said group containing said femto base station to said location area code not contained in any entry of any femto cell neighbour list of femto cell base stations within said group containing said femto base station.

12. The method of claim 1, comprising the step of:
causing user equipment to transmit said user equipment report in response to at least one of handling an active call and initiating a connection establishment request message.

13. The method of claim 12, wherein said initiating a connection establishment request message comprises camping from one femto cell to another femto cell having a differing location area code to said one femto cell.

14. A femto base station (F₁) operable to discover neighbouring femto cells (F₂-F₅) in a wireless communications network (10), said femto base station comprising:
detection logic (40) operable to detect neighbouring femto base station by receiving their transmissions;
a femto cell neighbour list (70) having an entry including transmission characteristics and femto cell identification characteristics for each neighbouring femto base station detected by said detection logic;
reception logic (40) operable to receive a user equipment report including user equipment discovered transmission characteristics relating to a user equipment discovered femto base station;
correlation logic (52) operable to determine whether said user equipment discovered transmission characteristics correlates with any of said transmission characteristics of entries within said neighbour list;
interrogation logic (50) operable, when no correlation exists, to interrogate said wireless communications network to obtain from said wireless communications network femto cell identification characteristics for said user equipment discovered femto base station and to add said femto cell identification characteristics for said user equipment discovered femto base station together with said user equipment discovered transmission characteristics as a further entry in said neighbour list.

15. A central node (230) operable to identify neighbouring femto cells (F₂-F₅) discovered by a femto base station (F₁) in a wireless communications network (10), said central node comprising:
reception logic operable to receive user equipment discovered transmission characteristics relating to a user equipment discovered femto base station from a femto base station;
a femto cell (235) list having an entry including transmission characteristics and femto cell identification characteristics for a number of femto base stations within said wireless communications network;
correlation logic operable to determine whether said user equipment discovered transmission characteristics relating to a user equipment discovered femto base station correlates with any of said transmission characteristics of entries within said femto cell list; and
transmission logic operable, when said user equipment discovered transmission characteristics relating to a user equipment discovered femto base station correlates with any of said transmission characteristics of entries within said femto cell list, to transmit femto cell identification characteristics for said user equipment discovered femto base station to said femto base station.

## Patentansprüche

1. Verfahren zur Entdeckung von benachbarten Femtozellen durch eine Femtobasisstation (F₁) in einem drahtlosen Kommunikationsnetzwerk (10), wobei das besagte Verfahren die folgenden Schritte umfasst:
Pflegen einer Femtozellen-Nachbarliste (70) für die besagte Femtobasisstation durch Bewirken, dass die besagte Femtobasisstation benachbarte Femtobasisstationen erkennt, indem sie deren Übertragungen empfängt, wobei die besagte Nachbarliste einen Eintrag mit Übertragungseigenschaften und Femtozellenidentifikationseigenschaften für jede erkannte benachbarte Femtobasisstation umfasst;
Empfangen (S20) eines Berichtes eines Benutzergeräts, welcher von einem Benutzergerät erkannte Übertragungseigenschaften in Bezug auf eine vom Benutzergerät entdeckte Femtobasisstation enthält,
Ermitteln (S20), ob die besagten vom Benutzergerät entdeckten Übertragungseigenschaften mit einer beliebigen der besagten Übertragungseigenschaften der Einträge innerhalb der besagten Nachbarliste korreliert ist; und
wenn keine Korrelation besteht, Befragen (S30) des besagten drahtlosen Kommunikationsnetzwerks, um von dem besagten drahtlosen Kommunikationsnetzwerk Femtozellenidentifikationseigenschaften für die besagte von dem Benutzergerät entdeckte Femtobasisstation zu erhalten und die besagten Femtozellenidentifikationseigenschaften für die besagte vom Benutzergerät entdeckte Femtobasisstation zusammen mit den besagten von dem Benutzergerät entdeckten Übertragungseigenschaften als einen weiteren Eintrag zu der besagen Nachbarliste hinzuzufügen.

2. Verfahren nach Anspruch 1, wobei der besagte Schritt des Befragens die folgenden Schritte umfasst:
Übertragen der besagten vom Benutzergerät entdeckten Übertragungseigenschaften an einen zentralen Knoten (230) des besagten drahtlosen Kommunikationsnetzwerks, welcher eine Femtozellenliste (235) mit einem Eintrag, der Übertragungseigenschaften und Femtozellenidentifikationseigenschaften für eine Anzahl von Femtobasisstationen innerhalb des besagten drahtlosen Kommunikationsnetzwerks einschließt, aufweist;
Ermitteln (S30), ob die besagten vom Benutzergerät entdeckten Übertragungseigenschaften mit einer beliebigen der besagten Übertragungseigenschaften der Einträge innerhalb der Femtozellenliste korreliert ist; und
wenn die besagten vom Benutzergerät entdeckten Übertragungseigenschaften mit einer beliebigen der besagten Übertragungseigenschaften der Einträge innerhalb der besagten Femtozellenliste korreliert ist, Übertragen (S40) der Femtozellenidentifikationseigenschaften für die besagte vom Benutzergerät entdeckte Femtobasisstation an die besagte Femtobasisstation.

3. Verfahren nach Anspruch 2, wobei der besagte Schritt des Ermittelns, ob die besagten vom Benutzergerät entdeckten Übertragungseigenschaften mit einer beliebigen der besagten Übertragungseigenschaften der Einträge innerhalb der besagten Femtozellenliste korreliert sind, den folgenden Schritt umfasst:
Ermitteln, ob die besagten vom Benutzergerät entdeckten Übertragungseigenschaften mit einer beliebigen der besagten Übertragungseigenschaften der Einträge innerhalb der besagten Femtozellenliste, welche eine Gruppenkennung aufweist, die mit derjenigen der besagten Femtobasisstation identisch ist, korreliert ist.

4. Verfahren nach Anspruch 1, wobei der besagte Schritt des Befragens den folgenden Schritt umfasst:
Übertragen der besagten vom Benutzergerät entdeckten Übertragungseigenschaften an andere Femtobasisstationen des besagten drahtlosen Kommunikationsnetzwerks; und
wenn die besagten vom Benutzergerät entdeckten Übertragungseigenschaften mit Übertragungseigenschaften einer der besagten anderen Femtobasisstationen korreliert sind, Empfangen, von der besagten einen der besagten anderen Femtobasisstationen, von Zellenidentifikationseigenschaften für die besagte vom Benutzergerät entdeckte Femtobasisstation.

5. Verfahren nach Anspruch 4, wobei der besagte Schritt des Übertragens der besagten vom Benutzergerät entdeckten Übertragungseigenschaften an andere Femtobasisstationen des besagten drahtlosen Kommunikationsnetzwerks umfasst:
Übertragen der besagten entdeckten Übertragungseigenschaften über einen Multicast-Kanal, für welchen die besagten anderen Femtobasisstationen abonniert sind, wobei die besagte Übertragung die besagte Femtobasisstation, an welche die besagten Femtozellenidentifikationseigenschaften für die besagte vom Benutzergerät entdeckte Femtobasisstation zu senden sind, identifiziert.

6. Verfahren nach Anspruch 1, den folgenden Schritt umfassend:
Herstellen (S50) einer Verbindung zu Femtobasisstationen innerhalb der besagten Femtozellen-Nachbarliste, um einen Austausch mindestens einer der Übertragungseigenschaften und der Femtozellenidentifikationseigenschaften zu ermöglichen.

7. Verfahren nach Anspruch 1, wobei die besagten Übertragungseigenschaften mindestens entweder einen primären Verwürfelungscode oder einen Übertragungszeitversatz umfassen.

8. Verfahren nach Anspruch 7, den folgenden Schritt umfassend:
Empfangen eines neu zugeteilten primären Verwürfelungscodes und Übertragungszeitversatzes für die besagte Femtobasisstation.

9. Verfahren nach Anspruch 1, wobei die besagten Femtozellenidentifikationseigenschaften mindestens entweder eine Femtozellenkennung, eine Standortbereichskennung oder eine Gruppenkennung umfassen.

10. Verfahren nach Anspruch 9, die folgenden Schritte umfassend:
Identifizieren, ob eine mit der besagten vom Benutzergerät entdeckte Femtobasisstation assoziierte Standortbereichskennung mit einem mit der besagten Femtobasisstation assoziierten Standortbereichscode identisch ist, und ob die besagte vom Benutzergerät entdeckte Femtobasisstation einer Gruppe, welche sich von der Gruppe der besagten Femtobasisstation unterscheidet, angehört, und, wenn die besagte vom Benutzergerät entdeckte Femtobasisstation mit einem mit der besagten Femtobasisstation assoziierten Standortbereichscode identisch ist und die besagte vom Benutzergerät entdeckte Femtobasisstation einer Gruppe, welche sich von der Gruppe der besagten Femtobasisstation unterscheidet, angehört, Ändern des besagten Standortbereichscodes für eine Gruppe, welche die besagte Femtobasisstation enthält.

11. Verfahren nach Anspruch 10, wobei der besagte Schritt des Änderns umfasst:
Bestimmen eines Standortbereichscodes, welcher in keinem Eintrag einer beliebigen Femtozellennachbarliste von Femtozellenbasisstationen innerhalb der besagten Gruppe, welche die besagte Femtobasisstation umfasst, enthalten ist, und Ändern des besagten Standortbereichscodes für die besagte Gruppe, welche die besagte Femtobasisstation umfasst, in einen Standortbereichscode, welcher in keinem Eintrag einer beliebigen Femtozellennachbarliste von Femtozellenbasisstationen innerhalb der besagten Gruppe, welche die besagte Femtobasisstation umfasst, enthalten ist.

12. Verfahren nach Anspruch 1, den folgenden Schritt umfassend:
Bewirken, dass das Benutzergerät in Reaktion auf mindestens entweder eine Behandlung eines aktiven Anrufs oder das Initiieren einer Verbindungsaufbauanforderungsnachricht den besagten Benutzergerät-Bericht überträgt.

13. Verfahren nach Anspruch 12, wobei das besagte Initiieren einer Verbindungsaufbauanforderungsnachricht das Camping von einer Femtozelle zu einer anderen Femtozelle, deren Standortbereichscode ein anderer als der der besagten einen Femtozelle ist, umfasst.

14. Femtobasisstation (F₁), betreibbar für das Entdecken von benachbarten Femtozellen (F₂-F₅) in einem drahtlosen Kommunikationsnetzwerk (10), wobei die besagte Femtobasisstation umfasst:
Entdeckungslogik (40), betreibbar für das Entdecken von benachbarten Femtobasisstationen durch Empfangen deren Übertragungen;
eine Femtozellennachbarliste (70) mit einem Eintrag, welcher Übertragungseigenschaften und Femtozellenidentifikationseigenschaften für jede durch die besagte Entdeckungslogik entdeckte benachbarte Femtobasisstation umfasst;
Empfangslogik (40), betreibbar für den Empfang eines Benutzergerätberichts, welcher von dem Benutzergerät entdeckte Übertragungseigenschaften in Bezug auf eine vom Benutzergerät entdeckte Femtobasisstation enthält;
Korrelationslogik (52), betreibbar, um zu ermitteln, ob die besagten vom Benutzergerät entdeckten Übertragungseigenschaften mit einer beliebigen der besagten Übertragungseigenschaften von Einträgen innerhalb der besagten Nachbarliste korreliert sind;
Befragungslogik (50), betreibbar, um, wenn keine Korrelation besteht, das besagte drahtlose Kommunikationsnetzwerk zu befragen, um von dem besagten Kommunikationsnetzwerk Femtozellenidentifikationseigenschaften für die besagte vom Benutzergerät entdeckte Femtobasisstation zu erhalten und die besagten Femtozellenidentifikationseigenschaften für die besagte vom Benutzergerät entdeckte Femtobasisstation zusammen mit den besagten vom Benutzergerät entdeckten Übertragungseigenschaften als einen weiteren Eintrag zu der besagten Nachbarliste hinzuzufügen.

15. Zentraler Knoten (230), betreibbar für das Identifizieren von von einer Femtobasisstation (F₁) entdeckten benachbarten Femtozellen (F₂-F₅) in einem drahtlosen Kommunikationsnetzwerk (10), wobei der besagte zentrale Knoten umfasst:
Empfangslogik, betreibbar für den Empfang von vom Benutzergerät entdeckten Übertragungseigenschaften in Bezug auf eine vom Benutzergerät entdeckte Femtobasisstation von einer Femtobasisstation;
Eine Femtozellenliste (235) mit einem Eintrag, welcher Übertragungseigenschaften und Femtozellenidentifikationseigenschaften für eine Anzahl von Femtobasisstationen innerhalb des besagten drahtlosen Kommunikationsnetzwerks umfasst;
Korrelationslogik, betreibbar, um zu ermitteln, ob die besagten vom Benutzergerät entdeckten Übertragungseigenschaften in Bezug auf eine vom Benutzergerät entdeckte Femtobasisstation mit einer beliebigen der besagten Übertragungseigenschaften von Einträgen innerhalb der besagten Femtozellenliste korreliert sind; und
Übertragungslogik, betreibbar, um, wenn die besagten vom Benutzergerät entdeckten Übertragungseigenschaften in Bezug auf eine vom Benutzergerät entdeckte Femtobasisstation mit einer beliebigen der besagten Übertragungseigenschaften der Einträge innerhalb der besagten Femtozellenliste korreliert sind, Femtozellenidentifikatioinseigenschaften für die besagte vom Benutzergerät entdeckte Femtobasisstation an die besagte Femtobasisstation zu übertragen.

## Revendications

1. Procédé de découverte de femtocellules voisines par une femtostation de base (F₁) dans un réseau de communication sans fil (10), ledit procédé comprenant les étapes suivantes :
remplir une liste de voisins de femtocellule (70) pour ladite femtostation de base en entraînant la détection par ladite femtostation de base de femtostations de base voisines en recevant leurs transmissions, ladite liste de voisins ayant une entrée comprenant des caractéristiques de transmission et de s caractéristiques d'identification de femtocellule pour chaque femtostation de base voisine détectée ;
recevoir (S20) un rapport d'équipement utilisateur comprenant des caractéristiques de transmission découvertes par un équipement utilisateur relatives à une femtostation de base découverte par un équipement utilisateur ;
déterminer (S20) si lesdites caractéristiques de transmission découvertes par un équipement utilisateur sont en corrélation avec l'une quelconque desdites caractéristiques de transmission d'entrées dans ladite liste de voisins ; et
lorsqu'il n'y a aucune corrélation, interroger (S30) ledit réseau de communication sans fil pour obtenir dudit réseau de communication sans fil des caractéristiques d'identification de femtocellule pour ladite femtostation de base découverte par un équipement utilisateur et ajouter lesdites caractéristiques d'identification de femtocellule pour ladite femtostation de base découverte par un équipement utilisateur auxdites caractéristiques de transmission découvertes par un équipement utilisateur en tant qu'autre entrée dans ladite liste de voisins.

2. Procédé selon la revendication 1, dans lequel ladite étape d'interrogation comprend les étapes suivantes :
transmettre lesdites caractéristiques de transmission découvertes par un équipement utilisateur à un noeud central (230) dudit réseau de communication sans fil présentant une liste de femtocellules (235) ayant une entrée comprenant des caractéristiques de transmission et des caractéristiques d'identification de femtocellule pour plusieurs femtostations de base dans ledit réseau de communication sans fil ;
déterminer (S30) si lesdites caractéristiques de transmission découvertes par un équipement utilisateur sont en corrélation avec l'une quelconque desdites caractéristiques de transmission d'entrées dans ladite liste de femtocellules ; et
lorsque lesdites caractéristiques de transmission découvertes par un équipement utilisateur sont en corrélation avec l'une quelconque desdites caractéristiques de transmission d'entrées dans ladite liste de femtocellules, transmettre (S40) des caractéristiques d'identification de femtocellule pour ladite femtostation de base découverte par un équipement utilisateur à ladite femtostation de base.

3. Procédé selon la revendication 2, dans lequel ladite étape de détermination de la corrélation ou non desdites caractéristiques de transmission découvertes par un équipement utilisateur avec l'une quelconque desdites caractéristiques de transmission d'entrées dans ladite liste de femtocellules comprend l'étape suivante :
déterminer si lesdites caractéristiques de transmission découvertes par un équipement utilisateur sont en corrélation avec l'une quelconque desdites caractéristiques de transmission d'entrées dans ladite liste de femtocellules ayant un identifiant de groupe identique à celui de ladite femtostation de base.

4. Procédé selon la revendication 1, dans lequel ladite étape d'interrogation comprend les étapes suivantes :
transmettre lesdites caractéristiques de transmission découvertes par un équipement utilisateur à d'autres femtostations de base dudit réseau de communication sans fil ; et
lorsque lesdites caractéristiques de transmission découvertes par un équipement utilisateur sont en corrélation avec des caractéristiques de transmission d'une desdites autres femtostations de base, recevoir de ladite parmi lesdites autres femtostations de base des caractéristiques d'identification de femtocellule pour ladite femtostation de base découverte par un équipement utilisateur.

5. Procédé selon la revendication 4, dans lequel ladite étape de transmission desdites caractéristiques de transmission découvertes par un équipement utilisateur à d'autres femtostations de base dudit réseau de communication sans fil comprend l'étape suivante :
transmettre lesdites caractéristiques de transmission découvertes sur un canal de multidiffusion auquel lesdites autres femtostations de base sont abonnées, ladite transmission identifiant ladite femtostation de base vers laquelle lesdites caractéristiques d'identification de femtocellule pour ladite station de base découverte par un équipement utilisateur doivent être envoyées.

6. Procédé selon la revendication 1, comprenant l'étape suivante :
établir (S50) une communication avec des femtostations de base dans ladite liste de voisins de femtocellule pour permettre l'échange d'au moins une des caractéristiques de transmission et des caractéristiques d'identification de femtocellule.

7. Procédé selon la revendication 1, dans lequel lesdites caractéristiques de transmission comprennent au moins un élément parmi un code de brouillage principal et un décalage temporel de transmission.

8. Procédé selon la revendication 7, comprenant l'étape suivante :
recevoir un code de brouillage principal et un décalage temporel de transmission nouvellement attribués pour ladite femtostation de base.

9. Procédé selon la revendication 1, dans lequel lesdites caractéristiques d'identification de femtocellule comprennent au moins un identifiant parmi un identifiant de femtocellule, un identifiant de zone de localisation et un identifiant de groupe.

10. Procédé selon la revendication 9, comprenant les étapes suivantes :
identifier si un identifiant de zone de localisation associé à ladite femtostation de base découverte par un équipement utilisateur est identique à un code de zone de localisation associé à ladite femtostation de base et si ladite femtostation de base découverte par un équipement utilisateur appartient à un groupe différent de celui de ladite femtostation de base et, si ladite femtostation de base découverte par un équipement utilisateur est identique à un code de zone de localisation associé à ladite femtostation de base et si ladite femtostation de base découverte par un équipement utilisateur appartient à un groupe différent de celui de ladite femtostation de base, remplacer ledit code de zone de localisation par un groupe contenant ladite femtostation de base.

11. Procédé selon la revendication 10, dans lequel ladite étape de remplacement comprend l'étape suivante :
déterminer un code de zone de localisation non contenu dans une quelconque entrée d'une quelconque liste de voisins de femtocellule de stations de base de femtocellule dans ledit groupe contenant ladite femtostation de base et remplacer ledit code de zone de localisation par ledit groupe contenant ladite femtostation de base par ledit code de zone de localisation non contenu dans une quelconque entrée d'une quelconque liste de voisins de femtocellule de stations de base de femtocellule dans ledit groupe contenant ladite femtostation de base.

12. Procédé selon la revendication 1, comprenant l'étape suivante :
entraîner la transmission par l'équipement utilisateur dudit rapport d'équipement utilisateur en réponse à la gestion d'un appel actif et/ou à l'envoi d'un message de demande d'établissement de connexion.

13. Procédé selon la revendication 12, dans lequel ledit envoi d'un message de demande d'établissement de connexion comprend passer d'une première femtocellule à une autre femtocellule ayant un code de zone de localisation différent de celui de ladite première femtocellule.

14. Femtostation de base (F₁) permettant de découvrir des femtocellules voisines (F₂ à F₅) dans un réseau de communication sans fil (10), ladite femtostation de base comprenant :
une logique de détection (40) permettant de détecter une femtostation de base voisine en recevant leurs transmissions ;
une liste de voisins de femtocellule (70) ayant une entrée comprenant des caractéristiques de transmission et des caractéristiques d'identification de femtocellule pour chaque femtostation de base voisine détectée par ladite logique de détection ;
une logique de réception (40) permettant de recevoir un rapport d'équipement utilisateur comprenant des caractéristiques de transmission découvertes par un équipement utilisateur relatives à une femtostation de base découverte par un équipement utilisateur ;
une logique de corrélation (52) permettant de déterminer si lesdites caractéristiques de transmission découvertes par un équipement utilisateur sont en corrélation avec l'une quelconque desdites caractéristiques de transmission d'entrées dans ladite liste de voisins ;
une logique d'interrogation (50) permettant, lorsqu'il n'y a aucune corrélation, d'interroger ledit réseau de communication sans fil pour obtenir dudit réseau de communication sans fil des caractéristiques d'identification de femtocellule pour ladite femtostation de base découverte par un équipement utilisateur et d'ajouter lesdites caractéristiques d'identification de femtocellule pour ladite femtostation de base découverte par un équipement utilisateur auxdites caractéristiques de transmission découvertes par un équipement utilisateur en tant qu'autre entrée dans ladite liste de voisins.

15. Noeud central (230) permettant d'identifier des femtocellules voisines (F₂ à F₅) découvertes par une femtostation de base (F₁) dans un réseau de communication sans fil (10), ledit noeud central comprenant :
une logique de réception permettant de recevoir des caractéristiques de transmission découvertes par un équipement utilisateur relatives à une femtostation de base découverte par un équipement utilisateur à partir d'une femtostation de base ;
une liste de femtocellules (235) ayant une entrée comprenant des caractéristiques de transmission et des caractéristiques d'identification de femtocellule pour plusieurs femtostations de base dans ledit réseau de communication sans fil ;
une logique de corrélation permettant de déterminer si lesdites caractéristiques de transmission découvertes par un équipement utilisateur relatives à une femtostation de base découverte par un équipement utilisateur sont en corrélation avec l'une quelconque desdites caractéristiques de transmission d'entrées dans ladite liste de femtocellules ; et
une logique de transmission permettant, lorsque lesdites caractéristiques de transmission découvertes par un équipement utilisateur relatives à une femtostation de base découverte par un équipement utilisateur sont en corrélation avec l'une quelconque desdites caractéristiques de transmission d'entrées dans ladite liste de femtocellules, de transmettre des caractéristiques d'identification de femtocellule pour ladite femtostation de base découverte par un équipement utilisateur à ladite femtostation de base.
